# EUROPEAN PATENT APPLICATION

(11) **EP 1 795 331 A1**
(43) Date of publication of application: **13.06.2007**
(21) Application number: 05111865.1
(22) Date of filing: 08.12.2005
(51) Int. Cl.: B29C 65/18, B29C 65/30, B65B 51/14, B65B 51/30, B31B 19/64

(54) **Heat seal system for packaging**

(71) Applicant: Nippon Consultants B.V., 3621 XL Breukelen (NL)
(72) Inventor: Veuger, Johannes Jacobus, 3621 XL Breukelen (NL); Van den Berg, Jacco, 6031 AP Nederweert (NL)
(74) Representative: Clarkson, Paul Magnus

(57) **Abstract**

A seal bar construction (100) is disclosed for thermally joining layers (29,31) of polymeric web (28) material. The construction (100) comprises an elongate seal bar (102) having a sealing surface and a heating arrangement. The heating arrangement provides a heating capacity that varies over the length of the seal bar (102) such that the polymeric web (28) material may be subjected to different degrees of heating. The variation of the heating capacity over the length of the seal bar (102) may be constant but may also be adjustable.

## Description

### BACKGROUND OF THE INVENTION

### 1. Field of the Invention

The present invention relates to heat seal systems for packaging purposes, in particular to seal systems for sealing containers formed from a web of polymeric material.

### 2. Description of the Related Art

Packaging machines are known in which a product is sealed within one or more webs of polymeric material to form a package. Such packages may take different forms such as bags, sachets, tubes, envelopes, boxes, capsules and the like. The package may be evacuated or may be provided with a particular gas filling to preserve freshness. In a certain form of packaging, the package is sealed by heating the polymeric material to its melting temperature and forming a welded joint. The sealing procedure is carried out using a heated seal bar that presses the polymeric material web against an anvil to produce the weld. Alternatively, two heated seal bars may press the webs between them. Sealing may take place in an intermittent or continuous manner. Intermittent sealing takes place by periodically stopping the web while sealing and cutting takes place. In continuous sealing processes, the seal bar may move with the web during the sealing process e.g. by providing a number of seal bars on a rotating structure.

Prior art seal bars of different forms are known. One conventional seal bar comprises a metal body having a sealing surface and a cavity extending through the length of the body. An electrical heating element is introduced into the cavity and retained there using an appropriate potting composition. Conventional electrical resistance heating elements are used comprising a coiled heating wire having a uniform distribution of coils over the length of the element. The heating element heats the metal body substantially continuously and heat is transmitted to the sealing surface. In order to ensure good heat transfer, aluminium and light metal alloys having high conductivity have been generally preferred. In order to prevent clinging of melted plastic, the sealing surface is usually covered by a PTFE layer or strip. When the heating element fails, its removal from the cavity is difficult, often requiring replacement and reconditioning of the seal bar. Such systems are known as permanent heat seal systems, since the heating supply is substantially constant.

Another form of seal bar is known as the impulse heating type. Rather than using a heating element located within a cavity of the seal bar, the impulse type seal bar uses an electrical heating wire applied directly along the sealing surface. The wire is covered with a thin strip of non-stick material such as PTFE. The wire is heated briefly each time that heat is required to perform a seal. A substantially uniform heat is applied over the whole length of the seal bar. Due to the cyclic nature of the heating and its exposure on the sealing surface, the wire and strip require frequent replacement. Furthermore, the presence of the strip acts as insulation, preventing good and uniform heat transfer to the seal. As a result, temperature spikes are frequent, leading to poor seal quality. An impulse type device is known from US patent No 6,789,371 that attempts to overcome such problems by use of a seal bar manufactured of PTFE and a heating wire which is also coated with PTFE or the like. Another device is known from US patent No 5, 966, 909, which attempts to improve operation of a packaging machine using a seal bar made of a magnesium alloy having high thermal conductivity.

Bag forming machines are known, in which a tubular web passes below a seal bar that produces a first and a second seal. The first and second seals become respective upper and lower seals of adjacent bags. The seal bar may also be provided with a knife or the like to sever the web between the two seals. The material for the tubular web may be chosen from a number of different polymers or laminates according to the desired properties of the final package. Exemplary materials for monolayer packaging webs include polyethylene (PE), polypropylene (PP), oriented polypropylene (OPP), biaxially oriented polypropylene (BOPP) in both cast and blown forms) and polystyrene (PS). These materials may also be used in multilayer laminated webs comprising layers of different polymers. Other materials suitable for multilayer use include but are not limited to polyamide (PA), polyethyletherephthalate (PET), PE ionomers such as Surlyn^{™} available from Dupont, metallocenes, aluminium, ethylene vinyl alcohol (EVOH), polyvinylidene chloride (PVDC) and collagene organic films. The present invention is intended to be applicable to all such packaging materials.

In order to initially form the tubular web the material is folded and sealed in the longitudinal direction to form a longitudinally extending fin or overlap seam. On presenting the tubular web to the seal bar, the region of the seam comprises at least three layers of material. The remainder of the tubular web may comprise only two layers. At either edge of the tubular web, the folding of the material results in an increased thickness. This variation in thickness of the material to be sealed has in the past been a cause of poor seal quality.

Sealing machines are also known in which the seal bar is placed vertically. In such arrangements, the tendency for heat to rise by convection can cause the upper part of the seal bar to be consistently hotter than the lower part. Poor seal quality may result.

There is thus a need for an alternative seal bar that can operate to produce consistent seals even when exposed to materials of varying thickness. There is also a need for a device that is easy to repair by exchange of damaged or broken elements. Furthermore, it is desirable that the temperature control of such a heating element should be accurate in order to ensure good seal quality. Such a device should be relatively cheap and simple to produce, without recourse to expensive materials and procedures.

### BRIEF SUMMARY OF THE INVENTION

According to the invention there is provided a seal bar construction for thermally joining layers of polymeric web material. The construction comprises an elongate seal bar having a sealing surface extending substantially over a length of the seal bar and a heating arrangement providing a heating capacity that varies over the length of the seal bar such that the polymeric web material may be subjected to different degrees of heating. In this manner, the user may take account of varying material thickness and other factors in order to produce a seal having the desired characteristics. It may thus be possible to heat an area of the seal to a greater extent to e.g. weaken it for subsequent opening. For vertically oriented seal bars, it may be possible to provide a greater supply of heat at the lower end than at the upper end to compensate for convection effects. The variation of the heating capacity over the length of the seal bar may be constant but may also be adjustable. In this manner, the heat supply may also be adjusted to compensate for variations in thickness with time.

In a preferred embodiment of the invention, a channel is provided extending through an interior of the seal bar and being substantially coextensive with the sealing surface. A heating element may then be located within the channel. Although reference is made to a single channel, it is clear that a plurality of channels may be present. This is particularly desirable when the seal bar comprises two sealing surfaces and a heating element is associated with each sealing surface.

According to a further feature of the invention, the heating arrangement comprises a plurality of zones of different heating capacity. Preferably, the heating arrangement comprises a heating element in the form of an electrical resistance heater e.g. of the electrical coil type. In this case, the zones may be achieved by providing a greater winding density at those areas where increased heating capacity is required e.g. at the seam and edges.

According to a still further feature of the invention, the device may comprise a control unit, the control unit controlling power to the heating arrangement to provide the different degrees of heating. In particular, the control unit may selectively provide heat to different zones.

According to another feature of the invention, the device may comprise a plurality of temperature sensors located on the seal bar adjacent to the sealing surface. By providing the sensors adjacent to the sealing surface, the precise temperature at the sealing surface may be measured. This is important in determining the temperature of the seal itself. By using a plurality of sensors, it is also possible to distinguish between the temperatures at different positions along the length of the seal bar. The control unit may then be responsive to the temperature sensors to control the power to the heating arrangement. In particular, it should be noted that the control unit may be responsive to supply heat to maintain equal temperatures at all of the sensors. Alternatively, in order to achieve the desired sealing, it may be necessary or desirable to maintain certain sensors at different temperature to other sensors.

The present invention also relates to an improved form of seal bar construction for thermally joining layers of polymeric web material. The construction comprises an elongate seal bar having a channel extending through an interior of the seal bar and a heating element located within the channel, wherein the seal bar comprises a first part and a second part that can be joined together and the channel comprises an elongate recess between the parts. It has been found that such an arrangement facilitates assembly and manufacture of the seal bar construction. It furthermore simplifies the removal and replacement of damaged or broken heating elements. In particular, by forming the channel as an elongate recess that is accessible over its whole length, the channel can be carefully sized to exactly receive the heating element. In this way improved conduction between heating element and seal bar may be achieved without the use of potting compound. The seal bar construction may have a heating arrangement with varying heating capacity as previously described or may be provided with a uniform heating arrangement.

According to a further advantageous feature of the present invention, the seal bar is manufactured of a material having relatively high heat capacity per unit volume that is able to buffer a substantial quantity of heat. For seal bars of the permanent heat seal type, it has been found that a key factor in assuring good seals is good and consistent heat transfer to the polymeric web. High conductivity can however lead to a fluctuating sealing temperature due to the polymeric material causing local cooling of the seal bar. Steel and its alloys have been found favourable for ensuring constant seal temperature.

In order for the seal bar of the invention to operate in the most effective manner, even with non-thermostabilised materials, the seal bar preferably comprises a non-stick sealing surface. By non-stick sealing surface it is understood that the surface of the seal bar itself is rendered non-stick by appropriate treatment. In this manner, additional non-stick films or strips such as PTFE are not required. It has been found that non-metallic films can reduce the thermal conduction from the seal bar to the film. Under such circumstances longitudinal heat transmission along the seal bar may reduce the advantageous effects of the invention.

According to another aspect of the invention, the device may further comprise a resilient interface for actuation of the seal bar by a packaging machine. Prior art seal bars as described above, included PTFE strips forming the sealing surface in order to prevent sticking. It was also frequent that such seal bars were used in combination with an anvil having a resilient pad. The resiliency of the PTFE strip or the pad would serve to better distribute the pressure over the full sealing surface. By removing the PTFE strip or other similar coating, and sealing directly between metal surfaces, higher actuation tolerances may be required. By providing a resilient mounting for transmission of the sealing pressure to the sealing element during use, an evenly distributed sealing pressure may be achieved. This is especially desirable in cases of relatively old and worn packaging machines where the tolerance of the seal bar actuators may be low. The resilient mounting may take the form of spring mountings or a layer of resilient material on the rear surface of the seal element. Alternatively, the resiliency may be provided on the surface of the packaging machine actuator or within the actuator mechanism itself. Such a resilient mounting for a seal bar is considered to be an independent invention in itself.

According to the invention there is also provided a method of sealing together layers of polymeric material in a web, the method comprising supplying the web to a seal bar, the web having a width; applying heat and pressure to the web across the width, sufficient to melt the polymeric material and form a seal, wherein the heat applied to the web varies across the width.

According to a further feature of the method, the thickness of the web supplied varies across the width and the heat applied to the web varies across the width in relation to the thickness of the web.

According to a yet further feature of the invention, the method comprises measuring a temperature signal indicative of the temperature of the web at a number of locations across the width and controlling the heat applied to the web in response to the temperature signal.

By use of the seal bar as described according to the present invention, considerable advantages may be achieved. In particular: the seal temperature required for effective sealing may be reduced by 30-50 °C; the seal time may be halved; the cooling time for the seal may be reduced by 40-50%; contamination of the seal bar by burned polymer is reduced; the maintenance interval for the sealing machine may be increased from 2-5 days to more than a month; and the time for replacement of a broken heating element may be minimized.

### BRIEF DESCRIPTION OF THE DRAWINGS

Further features and advantages of the invention will be appreciated upon reference to the following drawings of a number of exemplary embodiments, in which:

Figure 1 shows a cross-sectional view through a conventional permanent heat-seal seal bar construction;

Figure 2 shows a cross-sectional view through a conventional impulse seal bar construction;

Figure 3 shows a perspective view of a seal bar construction according to one aspect of the present invention;

Figure 4 shows a longitudinal cross-section through the seal bar of Figure 3 along line 4-4; and

Figure 5 shows a perspective view of part of the seal bar of Figure 3.

### DESCRIPTION OF ILLUSTRATIVE EMBODIMENTS

The following is a description of certain embodiments of the invention, given by way of example only and with reference to the drawings.

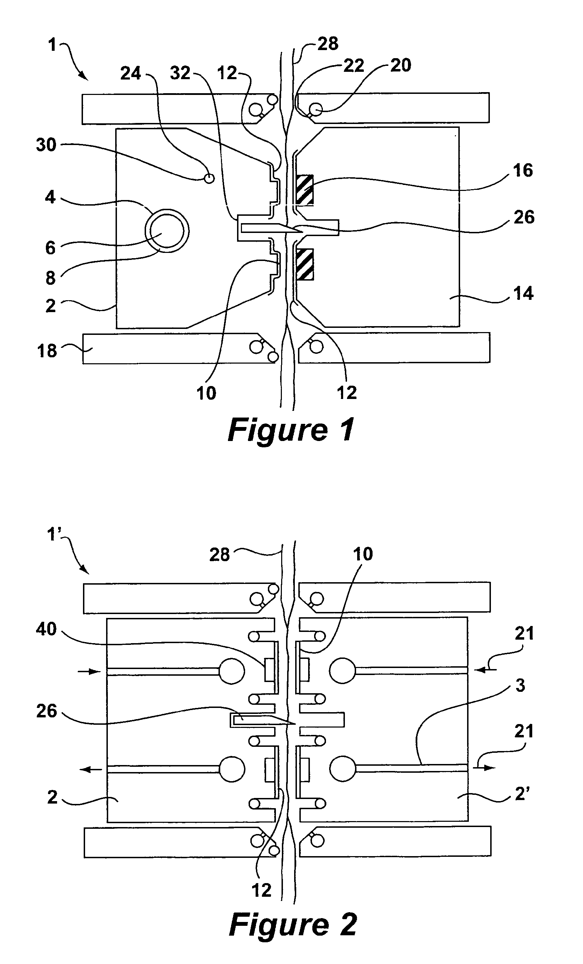

Figure 1 shows a cross-sectional view through a seal bar construction 1 as conventionally used in packaging machines of the bag forming type. The seal bar construction 1 comprises a generally elongate seal bar 2 having a channel 4 extending therethrough. A heating element 6 is located within the channel 4 and retained by means of a conventional heat conducting potting composition 8. A pair of sealing surfaces 10 are formed on one face of the seal bar. For sealing of polyethylene and other non-thermostabilised polymers, the sealing surfaces are covered by a PTFE tape 12. An anvil 14 is provided facing the seal bar 2. The anvil 14 is provided with rubber jaws 16 aligned with sealing surfaces 10. Rubber jaws 16 are also covered with PTFE tape 12. Web supports 18 are located on either side of both the seal bar 2 and anvil 14. The web supports 18 are provided with cooling air channels 20 having outlets 22. A temperature sensor 24 is located in a passage 30 in the body of the seal bar 2 and a knife 26 is supported in a groove 32 between the two sealing surfaces 10 such that it protrudes towards the anvil 14.

In use, the seal bar 2 is continuously heated by the heating element 6 to a temperature of around 170 - 190 °C. A web 28 of packaging material is fed between the seal bar 2 and the anvil 14. At a desired sealing position, the seal bar construction 1 is activated to cause the seal bar 2 and anvil 14 to move towards one another. The web 28 is severed by the knife 26 as the sealing surfaces 10 form a pair of seals by heating of the web material and pressure against the rubber jaws 16 of the anvil 14. Cooling air is supplied through channels 20 and outlets 22 to quickly cool the web 28 to a temperature at which the seal is stable. In certain arrangements, a second seal bar similar to seal bar 2 is employed instead of anvil 14.

As described above, during manufacture the seal bar 2 is formed from a single metal casting. The channel 4 is cast or subsequently drilled through the length of the seal bar 2. A similar procedure is used to form the passage 30 for insertion of the temperature sensor 24. In order to subsequently insert the heating element 6 and temperature sensor 24, the drilled channel 4 and passage 30 must be formed with adequate clearance. To ensure good heat transmission, these clearances must be filled with a suitable heat conducting potting compound that makes subsequent removal extremely difficult. Because of the method of manufacture, careful location of the temperature sensor 24 close to the sealing surfaces 10 is also precluded.

Figure 2 shows an alternative seal bar construction 1' of the impulse heating type. Elements corresponding to those described in relation to Figure 1 will be provided with like reference numerals. Unlike the seal bar construction 1, the seal bar construction 1' has no channel. Heating wires 40 are provided extending along the length of the sealing surfaces 10. The heating wires 40 are covered by PTFE tape 12. Furthermore, no temperature sensor is present within the body of the seal bar. In the illustrated embodiment, a pair of seal bars 2, 2' are used without an anvil. Water cooling 21 is provided for cooling purposes.

In use, as in the case of seal bar construction 1, a web 28 of packaging material is fed between the seal bars 2, 2'. At a desired sealing position, the seal bar construction 1' is activated to cause the seal bars 2, 2' to move towards one another. At this point, an impulse of current is applied to the heating wires 40 causing them to be heated rapidly to around 170 - 190 °C. The web 28 is severed by the knife 26 as the sealing surfaces 10 form a pair of seals by heating of the web material and pressure between the sealing surfaces 10. It is again noted that in the prior art, variations on this procedure and construction may exist.

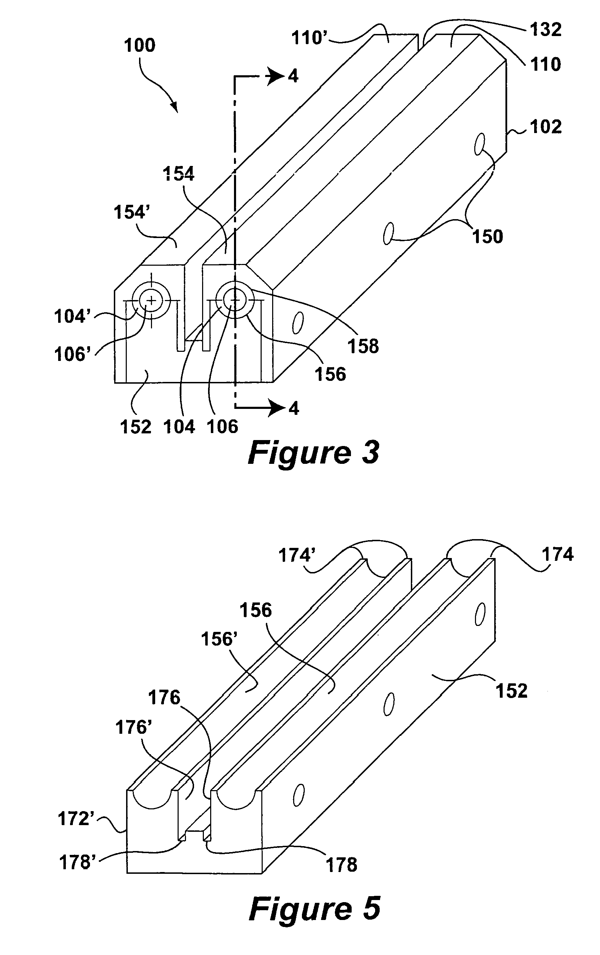

Turning to Figure 3, there is shown a seal bar construction 100 according to an embodiment of the present invention. Elements corresponding to those described in relation to Figure 1 are provided with like reference numerals in the range from 100 to 200. As above, the seal bar construction 100 may form part of a packaging machine for bagging or otherwise enclosing a product.

The seal bar construction 100 comprises a generally elongate seal bar 102 having similar external dimensions to the prior art seal bars described above. A pair of channels 104, 104' extend through the length of the seal bar 102. Heating elements 106, 106' are located within the channels 104, 104'. A pair of sealing surfaces 110, 110' are formed on one face of the seal bar. For sealing of polyethylene and other non-thermostabilised polymers, the sealing surfaces may be covered by a PTFE tape (not shown). It is however preferred that the sealing surfaces 110, 110' are rendered non-stick by other means without application of an intermediate layer. It has been found that the presence of intermediate layers having lower thermal conductivity considerably reduces the effect of the longitudinal heat distribution. The seal bar 102 is arranged to engage with an anvil as described previously but may also engage with a second similar seal bar. Fastening bores 150 are provided for joining web supports on either side of the seal bar 102. A groove 132 is located between the two sealing surfaces 110, 110' for receipt of a suitable knife.

Unlike the prior art seal bar constructions, seal bar 102 is constructed in a number of separate parts. In this example, there is provided a block 152 and a pair of head elements 154, 154' each having its respective sealing surface 110, 110'. The channel 104 is formed partially as a recess 156 in the block 152 and partially as a complementary recess 158 in the head element 154. Both the block 152 and the head elements 154 are manufactured from steel alloy having good thermal buffering capability.

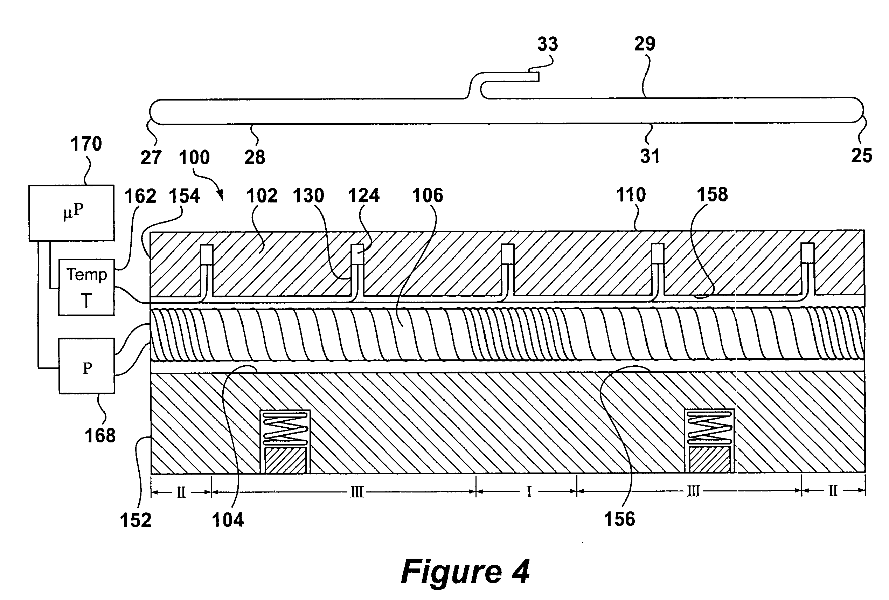

Figure 4 shows a longitudinal cross-section along line 4-4 of Figure 3. Figure 4 also shows a web 28 of PE packaging material and its relationship to the seal bar 102. As can be seen, the web 28 is folded at edges 25, 27 to form two layers 29, 31. The web 28 is joined to itself at a fin seam 33 to form a tube.

According to Figure 4, the extension of the heating element 106 and channel 104 throughout the length of the seal bar 102 is visible. In this view also, five blind bores 130 for receipt of temperature sensors 124 can bee seen. The blind bores 130 extend upwards from the upper surface of complementary recess 158 and terminate just short of the sealing surface 110. Each temperature sensor 124 is thus located as close as possible to the sealing surface 110 and can accurately record the local temperature of the head element 154 at that point. An appropriate connection 160 connects the temperature sensors 124 to a temperature register 162.

From Figure 4, it can be seen that the heating element 106 comprises a winding 164. The winding 164 is of the electrical resistance type. It may be noted that although a clearance is shown between the heating element and the channel 104, in reality, these elements are in intimate contact with one another. According to one feature of the present invention, the heating element 106 is divided into a number of zones. In a first central zone I, the winding 164 has a first high winding density. In second zones II, located at either end of the heating element, the winding 164 has a second lower winding density. In intermediate zones III between the zones I and II, the winding 164 has a third low winding density. The winding 164 is supplied by electrical connections 166 from an electrical supply 168. Both the electrical supply 168 and the temperature register 162 are connected to a control unit 170 which both monitors and controls operation of the heating element 106 and sensors 124. The control unit 170 may form part of the overall control of the packaging machine in which the seal bar 102 is located. Alternatively, it may be an independent element, with or without interface to the packaging machine controls. Although in the above embodiment, all zones are connected in series as a single heating element, it is also possible to connect zones in parallel and provide separate control for each zone.

According to Figure 4, a further inventive aspect is also illustrated. In the base 152 of the seal bar, are located a pair of resilient actuator mounts 180. The actuator mounts 180 comprise springs 182 and plates 184. During operation, the seal bar will be located within a packaging machine for actuation by appropriate actuators (not shown). The actuator mounts 180 are positioned to receive the actuators. The springs 182 are calibrated such that on actuation of the seal bar the correct sealing pressure is applied over the full length of the seal bar 102. Any variation or inaccuracy in the actuator mechanism may then be compensated for by the resilience of the springs 182. Although the actuator mounts 180 are illustrated in a seal bar construction according to the present invention, it is noted that such resilient mounting may also be applied to prior art seal bar and anvil constructions as shown in Figures 1 and 2.

Figure 5 shows in perspective view, the base 152 of the seal bar construction 100. The base 152 is formed of a single piece casting of steel. The surfaces that will be mate with surfaces of the head elements 154, 154' are machined to a high tolerance. These surfaces are side surfaces 172, 172', upper surfaces 174, 174', inner surfaces 176, 176' and groove base 178, 178'. Furthermore, the interior surfaces of recesses 156, 156' are carefully machined to precisely receive the heating element 106. Although not shown in this embodiment, the seal bar base 152 need not be of constant cross-section. In particular, the recess dimensions may vary e.g. stepwise in the lengthwise direction. In this manner it may accommodate variation in the cross-section of the heating element 106 or it can interlock with correspondingly shaped head elements 154, 154' to prevent incorrect assembly.

Use of the seal bar 102 is substantially similar to that of the seal bar 2 of Figure 1. The zone I is aligned with the seam 33 where four layers of material overlap. The zones II are aligned with the edges 25, 27 where the web is folded. The zones III are aligned with intermediate regions of the web 28 where only the two layers 29, 31 of material are present. The heating element 106 is continuously heated by supply of electrical current from electrical supply 168. Because of the variation in winding density, the heat produced in the region I is greater than that produced in regions II, which is in turn greater than that in region III. Due to the form of the web 28, the heat adsorbed to melt and seal the seam 33 is greater than that required to seal the edges 25, 27, which is in turn greater than the heat needed to seal the two layer regions 29, 31. By balancing the heat supply to the heat required a rather lower temperature of around 120-125 °C can be maintained at the sealing surfaces 110, 110'. Despite the lower temperature, adequate heat is supplied to ensure sealing of the seam 33 without melting through other two layer regions. It is understood by the skilled person that for other polymeric webs and for other seal forms, different temperatures may be used.

During operation of the seal bar 102, the temperature register 162 and sensors 124 can continuously monitor the correct temperature of the sealing surface. In the event that overheating occurs in one region, corrective measures may be taken to adjust the heating supply 168. It is noted that in alternative embodiments, the heating element 106 may comprise regions that can be selectively heated independently of one another under appropriate control of the control unit 170.

Thus, the invention has been described by reference to the embodiment discussed above. It will be recognized that this embodiment is susceptible to various modifications and alternative forms well known to those of skill in the art. Many modifications in addition to those described above may be made to the structures and techniques described herein without departing from the spirit and scope of the invention. Accordingly, although specific embodiments have been described, these are examples only and are not limiting upon the scope of the invention.

## Claims

1. A seal bar construction for thermally joining layers of polymeric web material comprising:
an elongate seal bar having a sealing surface extending substantially over a length of the seal bar; and
a heating arrangement providing a heating capacity that varies over the length of the seal bar such that the polymeric web material may be subjected to different degrees of heating.

2. The device as claimed in claim 1, further comprising a channel extending through an interior of the seal bar and being substantially coextensive with the sealing surface, the heating arrangement being located within the channel.

3. The device as claimed in claim 1 or claim 2, wherein the heating arrangement comprises an electrical resistance heater having a plurality of zones of different heating capacity.

4. The device as claimed in any preceding claim, further comprising a control unit, the control unit controlling power to the heating arrangement to provide the different degrees of heating.

5. The device as claimed in any preceding claim, further comprising a plurality of temperature sensors located along the seal bar adjacent to the sealing surface.

6. The device as claimed in claim 5 and claim 4, wherein the control unit is responsive to the temperature sensors to control the power to the heating arrangement.

7. The device as claimed in any of claims 2 to 6, wherein the seal bar comprises a first part and a second part that can be joined together and the channel comprises an elongate recess formed between the parts.

8. The device as claimed in any of claims 2 to 7, wherein the seal bar comprises a plurality of channels.

9. The device as claimed in any preceding claim, wherein the seal bar comprises a non-stick sealing surface.

10. The device as claimed in any preceding claim, further comprising a resilient interface for actuation of the seal bar by a packaging machine.

11. A method of sealing together layers of polymeric material in a web, the method comprising:
supplying the web to a seal bar, the web having a width;
applying heat and pressure to the web across the width, sufficient to melt the polymeric material and form a seal, wherein the heat applied to the web varies across the width.

12. The method of claim 11, wherein the thickness of the web varies across the width and the heat applied to the web varies across the width in relation to the thickness of the web.

13. The method according to claim 11 or claim 12, further comprising measuring a temperature signal indicative of the temperature of the web at a number of locations across the width and controlling the heat applied to the web in response to the temperature signal.

14. The method according to any of claims 11 to 132, wherein the web comprises a tube of polymeric material having a seam.

15. A packaging machine comprising a seal bar construction according to any of claims 1 to 10.
